# EUROPEAN PATENT SPECIFICATION

(11) **EP 3 033 199 B1**
(45) Date of publication and mention of the grant of the patent: **13.02.2019**
(21) Application number: 13891562.4
(22) Date of filing: 31.10.2013
(51) Int. Cl.: B23P 23/00, B27C 9/04

(54) **CUTTING MACHINE**
SCHNEIDMASCHINE
MACHINE DE COUPE

(30) Priority: 16.08.2013 CN 201310359187
(43) Date of publication of application: 22.06.2016
(73) Proprietor: Ningbo Defeng Power Technology Co., Ltd., Yuyao, Zhejiang 315403 (CN)
(72) Inventor: CHEN, Shige, Zhejiang 315400 (CN); SONG, Xiwan, Zhejiang 315400 (CN)
(74) Representative: Schlief, Thomas P.
(86) International application number: PCT/CN2013/086343
(87) International publication number: WO 2015/021696

(56) References cited:
- CN-A- 102 689 181
- CN-U- 202 087 965
- CN-U- 202 271 165
- CN-Y- 2 205 280
- FR-A1- 2 640 542
- IT-A1- PD20 080 363
- US-A1- 2004 238 069
- US-A1- 2008 216 622
- US-A1- 2010 058 910

## Description

### Technical field

The present invention relates to a power tool, particularly to, a cutting machine which is able to engage with additional processing heads and to share an operating turntable.

### Background

Cutting machines, also referred to as saw machines, are classified into vertical cutting machines and oblique cutting machines according to the relative angular dependence of its saw blade with regard to an operating turntable. The saw blade of the vertical cutting machine is perpendicular to the operating turntable to cut a work piece, thereby cannot adjusting its cutting angle with respect to the operating turntable. The oblique cutting machine is a cutting machine wherein cutting angles of the saw blade on a cutting machine head assembly can be adjusted with regard to the operating turntable.

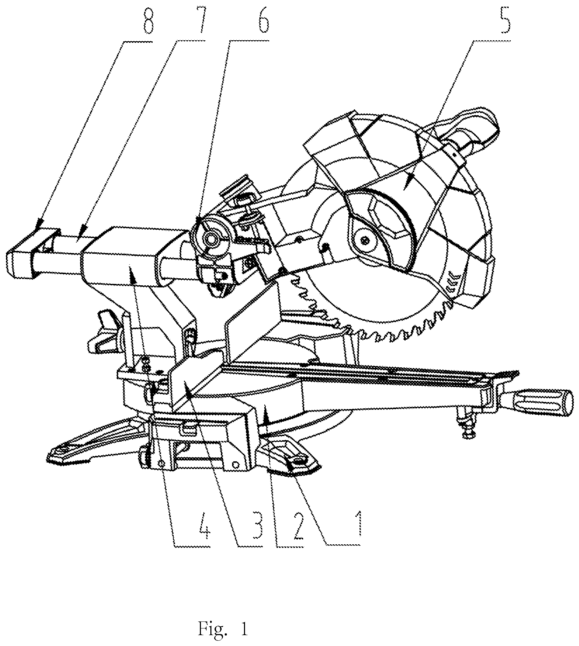

Fig. 1 is a view showing an oblique cutting machine according to the prior art with a rocker arm and a pulling rod according to the prior art. As shown in Fig. 1, the oblique cutting machine comprises a pedestal 1, an operating turntable 2 pivotally supported on the pedestal 1 and provided with a saw blade receiving groove, a back plate 3 fixed on the pedestal 1 for fixing a work piece, a rocker arm 4 hinged with the operating turntable so as to realize pivot in left-right direction and fixation, a pulling rod 7 passing through the upper portion of the rocker arm 4 and slidably fitted with the same, and a cutting machine head assembly 5 hinged at one end of the pulling rod 7. Therefore, the oblique cutting machine increase a cutting width to the work piece compared with a cutting machine without the pulling rod 7, the increment of the cutting width equals to the operating stroke of the pulling rod 7.

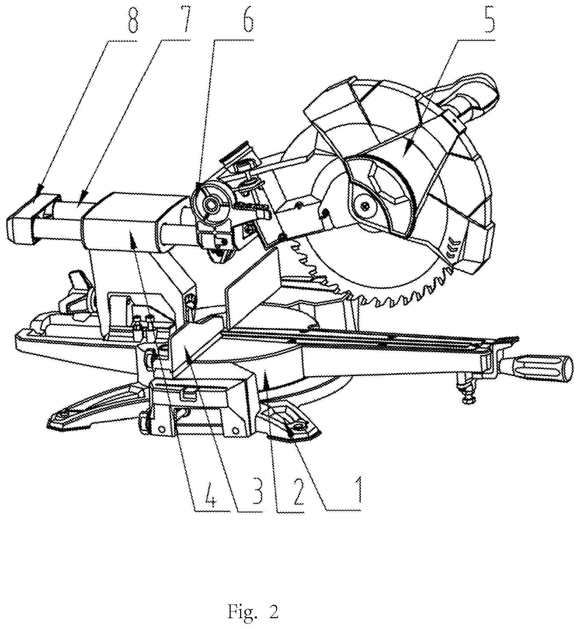

Fig. 2 is view showing an oblique cutting machine according to the prior art provided with a sliding sleeve assembly and a pulling rod. Referring to Fig. 1 and Fig. 2, the oblique cutting machine in Fig. 2 is different from the oblique cutting machine in Fig. 1 in that a set of sliding sleeve assembly is provided between the operating turntable 2 and the rocker arm 4, thus achieving a freedom of reciprocating motion for the rocker arm 4 with regard to the operating turntable2, then further increasing moving distances of the circular disk saw blade along the saw blade receiving groove, and further making the cutting width to a work piece increasing the operating stroke of the sliding sleeve assembly.

Further, US patent application publication No. 2004/238069 A1 discloses a multifunctional electrically powered and operated construction apparatus incorporating an electric saw tool, an electric planer tool, and an electric drill tool all mounted upon a common stock pillar of the apparatus. The apparatus incorporates a unique system of cooperating transmission and gear subassemblies that enable an operator of the apparatus to quickly and efficiently adjust the apparatus to toggle between sawing, drilling and planning functions.

However, the oblique cutting machines mentioned above can perform one function for cutting a work piece only. In the application of the oblique cutting machine mentioned above, some of the work pieces need to be drilled, milled, and polished after being cut, thus it is necessary to position the work piece to an operation turntable of a drilling machine, a grinding machine, a polishing machine respectively for the subsequent processing, sometimes the subsequent processing could be done by an operator who is holding an power tools or a work piece. Therefore, there is a need to provide a cutting machine which can not only cut work piece, but also can perform the subsequent processing to the same work piece by switching to other working positions after such cutting.

### Summary

### The problem to be solved by the present invention

The problem to be solved by the present invention is attaching additional processing heads to a cutting machine, and making it cut a work piece and then performs subsequent processing by switching working positions.

### The technical means to be provided by the present invention

To solve the problems mentioned above, in accordance with the present invention, there is provided a cutting machine which can perform the following processing, comprising vertical cutting, oblique cutting, reciprocating cutting of a circular disk saw blade along a saw blade receiving groove, and subsequent processing by switching other working positions through the rotation of the cutting machine head assembly with regard to the operating turntable, the cutting machine comprising: a pedestal provided with a back plate for fixing a work piece, an operating turntable pivotally supported on said pedestal, comprising a linear saw blade receiving groove in the direction from distal to proximal, and wherein either said back plate is provided in the middle upper portion of the pedestal; a sliding path disposed at its distal end side along or parallel to an extension line of said saw blade receiving groove; a slider slidably engaged with said sliding path so as to form a sliding assembly with said sliding path; or said back plate is provided on the proximal end side of the pedestal, and a rocker arm seat is disposed at distal end side of the operating turntable; characterized in that a rocker arm comprising an upper rocker arm and a lower rocker arm having a cylindrical shape in the position of engagement with each other, the lower end of said lower rocker arm is hinged with and locked to said slider or said rocker arm seat, thereby making it adjust an angle and making it be locked in left-right direction with regard to said operating turntable, said upper rocker arm concentrically disposed on said lower rocker arm, said upper rocker arm is provided with sliding path holes; a pulling rod passing through said sliding path holes and sliding engaged with said sliding path holes, comprising a connecting seat provided at its proximal end; a cutting machine head assembly hinged at its distal end with said connecting seat of said pulling rod, proving with a handle at its proximal end, thereby making it pivot up and down with regard to said pulling rod by applying force to said handle, which comprises a main body, a motor securely fixed with said main body, and a circular disk saw blade connected to a motor spindle or a driven shaft driven by the spindle through a center hole thereof, wherein the plane on which said circular disk saw blade is located corresponding to said saw blade receiving groove in said operating turntable, wherein the other end of said pulling rod is provided with a connecting hole, an additional processing head frame is detachably inserted into said connecting hole, said additional processing head frame is mechanically connected with additional processing heads, and wherein the contact surfaces of said lower rocker arm and said upper rocker arm are connected by a concave-convex structure, and are fixed by a coupling bar in their center line, thereby attaining rotation of said upper rocker arm with regard to said lower rocker arm and thus attaining radial engagement and axial limiting and fixation with respect to each other.

The cutting machine according to one embodiment of the present invention, may comprise a connecting hole in the upper surface of said upper rocker arm, said connecting hole is located on a side of said sliding path holes for detachably inserting the additional processing head frame so that said additional processing head frame is mechanically connected with the additional processing heads.

The cutting machine according to one embodiment of the present invention, may comprise two connecting holes in the upper surface of said upper rocker arm, said two connecting holes are located on both sides of said sliding holes respectively for detachably inserting the additional processing head frame so that said additional processing head frame is mechanically connected with the additional processing heads.

In the cutting machine according to one embodiment of the present invention, said additional processing heads may comprise a handheld power drill, a grinder or a polisher.

In the cutting machine according to one embodiment of the present invention, said concave-convex structure is a structure that the concave surface of said upper rocker arm is matched with the convex surface of said lower rocker arm, or that the convex surface of said upper rocker arm is matched with the concave surface of said lower rocker arm.

In the cutting machine according to one embodiment of the present invention, said concave-convex structure may be located at a position of the outer circumference of contact surface of said upper rocker arm and said lower rocker arm, or may be located at a position near the center of the contact surface of said upper rocker arm and said lower rocker arm.

In the cutting machine according to one embodiment of the present invention, said coupling bar may comprise a bolt and a nut for fixing said upper rocker arm and said lower rocker arm, or said coupling bar may comprise a screw head at the lower end of said coupling bar and an eccentric handle coupling to the upper end of said coupling bar.

In the cutting machine according to one embodiment of the present invention, said rocker arm may comprise a pre-fitting clearance adjusting mechanism for adjusting an engagement clearance of said concave-convex structure between said upper rocker arm and said lower rocker arm, and a bolt which is inserted into said upper rocker arm at its upper end and passes through said lower rocker arm , at its another end to the bolt defines a clearance between the engagement face of said upper rocker arm and said lower rocker arm through the threads of a nut. Preferably, said pre-fitting clearance adjusting mechanism is a hollow bolt and a nut connecting with said coupling bar.

In the cutting machine according to one embodiment of the present invention, a limiting hole and a limiting pin inserting in said limiting hole may be provided in said lower rocker arm, and a limiting groove is provided in a position which is on said upper rocker arm to correspond to a position of one or more connection hole located on a working position of said operating turntable, so as to obtain rotating limit between said upper rocker arm and said lower rocker arm when said limiting pin is inserted into said limiting groove. Preferably, said limiting hole and said limiting groove are located between the upper/lower mating surfaces of said lower rocker arm and said upper rocker arm, or preferably said limiting hole and said limiting groove are located between the cylindrical mating surfaces of said lower rocker arm and said upper rocker arm.

The cutting machine according to one embodiment of the present invention, may further comprise a safety switch, said safety switch is provided to power on the power supply of the cutting machine only when said circular disk saw blade corresponds to said saw blade receiving groove, and to power off the power source of the cutting machine at any other positions.

### The effect of the present invention

The cutting machine according to the present invention can increase one or more additional processing heads on the basis of the cutting machine according to the prior art, thereby it can obtain transformation of working position by rotating and locking an upper rocker arm with regard to a lower rocker arm, and then transforming the necessary working head to the position above the operating turntable, thus performing subsequent processing, such as drilling, grinding, and polishing to the work piece after cutting processing, or performing cutting after drilling, grinding, and polishing to the work piece. Therefore, it is to optimize the use of performance of the operating turntable to position a work piece thereon, and accordingly increasing the working accuracy of the additional processing head. Also, since a work piece can be processed in various kinds of processing on the same operating turntable, the time required to fix a work piece to different working turntable can be reduced and thus improve the efficiency.

### Brief Description of the Drawings

- **FIG. 1**: is a view showing an oblique cutting machine in a pulling rod mode according to the prior art.
- **FIG. 2**: is a view showing an oblique cutting machine in a combination mode a pulling rod and a sliding sleeve according to the prior art.
- **FIG. 3**: is a view showing a cutting machine under a state of cutting a work piece according to a first embodiment of the present invention.
- **FIG. 4**: is a view showing the cutting machine under a state of drilling a work piece according to the first embodiment of the present invention.
- **FIG. 5A**: is a cross section view showing the structure of a rocker arm according to the first embodiment of the present invention.
- **FIG. 5B**: is a side view showing the structure of a rocker arm according to the first embodiment of the present invention.
- **FIG. 6A**: is a cross section view showing the structure of a rocker arm according to the second embodiment of the present invention.
- **FIG. 6B**: is a side view showing the structure of a rocker arm according to the first embodiment of the present invention.
- **FIG. 7A**: is a cross section view showing the structure of a rocker arm according to the third embodiment of the present invention.
- **FIG. 7B**: is a side view showing the structure of a rocker arm according to a third embodiment of the present invention.
- **FIG. 8A**: is a cross section view showing the structure of a rocker arm according to a fourth embodiment of the present invention.
- **FIG. 8B**: is a side view showing the structure of a rocker arm according to the fourth embodiment of the present invention.
- **FIG. 9**: is a view showing a cutting machine under the state of cutting a work piece according to another embodiment of the present invention.
- **FIG. 10**: is a view showing a cutting machine under the state of drilling a work piece according to another embodiment of the present invention.

### Detailed description

The embodiments of the present invention will be described in the following with reference to the attached drawings.

### First embodiment of the present invention.

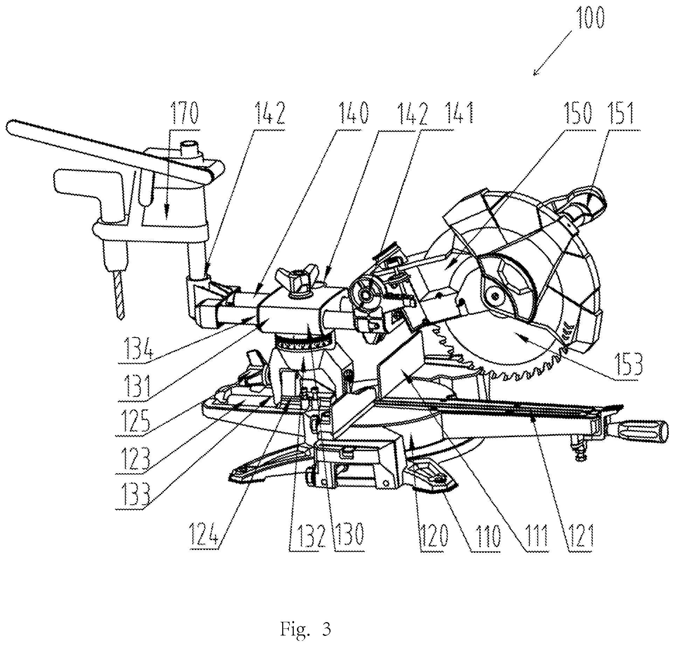

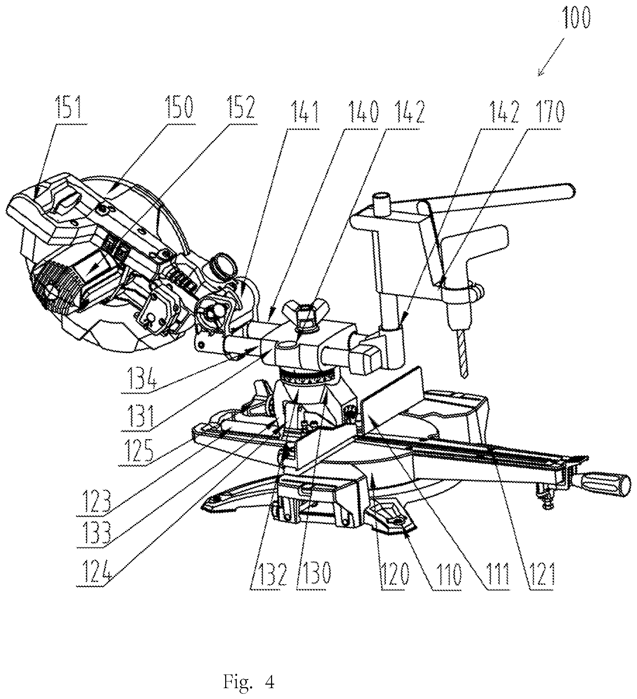

Fig. 3 is a view showing a cutting machine under a state of cutting a work piece according to a first embodiment of the present invention. Fig. 4 is a view showing the cutting machine under a state of drilling a work piece according to the first embodiment of the present invention. The overall configuration of the cutting machine according to the first embodiment of the present invention will be described in the following in detail with reference to Figs. 3 and 4.

As shown in Figs. 3 and 4, the cutting machine 100 according to the first embodiment of the present invention comprises a pedestal 110, an operating turntable120, a rocker arm 130, a pulling rod 140, a cutting machine head assembly 150, a back plate 160 and an additional processing head frame 170.

The pedestal 110 is a supporting base of the cutting machine 100, which is supported on the floor. The pedestal 110 may further comprise a back plate 111 provided on upper surface thereof.

The operating turntable120 is a workbench of the cutting machine 100 and pivotally supported on the pedestal. The operating turntable120 can pivot with regard to the pedestal 110 and can be locked at any angle.

For convenience to describe the embodiment, the description will made by taking an orientation that an operator is observing the cutting machine 100 in his/her operation position. For example, in the longitudinal direction, a position near the user is described as "proximal end", and a position away from the user is described as "distal end". Similarly, setting the side in left hand of the user as "left side", and setting the side in right hand of the user as "right side". The same rules also apply to the other embodiments of the present invention.

The operating turntable 120 is provided at its proximal end side with a linear saw blade receiving groove 121 in the direction from distal end to proximal end, and provided at its distal end side with a sliding path 123 along or parallel to an extension line of the saw blade receiving groove 121.

A slider 124 is be slidably connected to the sliding path 123 provided on the operating turntable 120, and forms a sliding assembly with the sliding path 123.

The rocker arm 130 comprises an upper rocker arm 131 and a lower rocker arm 132 having a cylindrical shape in the position of engagement with each other, the lower end of the lower rocker arm 132 is hinged with the slider 124 by a connecting head 133, and can be locked by a locking knob 125, thereby enabling it to adjust an angle or to lock in a direction from left to right with regard to the operating turntable 120. The upper rocker arm 131 is concentrically provided on the lower rocker arm 132, and the upper portion of the upper rocker arm 131 is provided with sliding path holes 134. The detail structure of the rocker arm 130, and the pivoting and locking of upper rocker arm 131 with regard to the lower rocker arm 132 and so on, will be described in the following in detail.

The pulling rod 140 passes through the sliding holes 134 and forms a sliding fit with the sliding holes 134. The pulling rod 140 may be provided with a connecting seat 141 at its proximal end.

The cutting machine head assembly 150 is an assembly on which a motor 152 and a circular disk saw blade 153 are fixed, at its distal end can be provided with a hinge shaft hole which is hinged with the connecting seat 141 of the pulling rod 140, at its proximal end can be provided with a handle 151, thus making it pivot in the upper-down direction with regard to a hinge between the cutting machine head assembly 150 and the pulling rod 140 by a force applied by the handle 151.

A housing of the motor 152 is fixed connection with the cutting machine head assembly 150 in the middle of the cutting machine head assembly 150, making a spindle or a driven shaft of the motor 152 driven by the spindle be parallel with the top surface of the operating turntable 120.

The center hole of the circular disk saw blade 153 is inserted by the spindle of the motor 152 or by the driven shaft driven by the spindle, and fixed there between. Therefore, the circular disk saw blade 153 rotates with the rotation of the spindle of the motor 152 or the driven shaft driven by the spindle, and making a plane on which the circular disk saw blade 153 is located corresponds to the saw blade receiving groove 121 of the operating turntable120.

In the example as shown in Fig. 3 and Fig. 4, on the top surface of the upper rocker arm 131 and at the other end of the pulling rod 140 further comprise one or more connecting holes 142 in equal spacing with regard to the connecting seat 141. Such two connecting holes 142 are shown in Fig. 3 and Fig. 4 respectively, however, for those skilled in the art, such connecting holes can be more than two as need to design. An additional processing head frame 170 may be detachably inserted into the one or more connecting holes 142. Only one additional processing head frame 170 is shown in Fig. 3 and Fig. 4, and is located approximately at a position opposed with the cutting machine head assembly 150 and at the center of the rocker arm 130. Although not shown in the drawings, the additional processing head frame 170 may be inserted into another connecting hole 142, or, another additional processing head frame 170 may be inserted in another connecting hole 142. The additional processing head frame 170 can be mechanically joined with an additional processing head. In Fig. 3 and Fig. 4, the additional processing head is schematically shown as a handheld power drill. Of course, the additional processing head may be an angle grinder, an abrasive finishing machine, a grinder or the combination thereof, which can be properly adjusted to meet the requirement for design and applications.

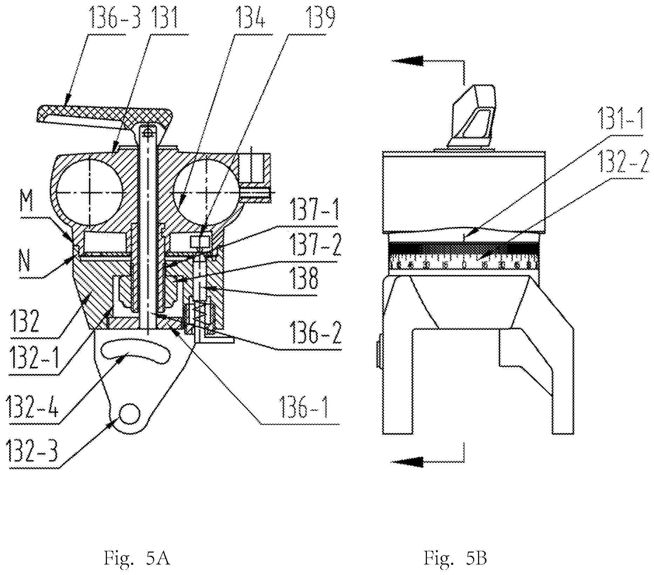

Fig. 5 is a view showing a rocker arm structure according to the first embodiment of the present invention, wherein Fig. 5A is a cross section view showing a rocker arm structure according to the first embodiment of the present invention, and Fig. 5B is a side view showing a rocker arm according to the first embodiment of the aspect of the present invention.

The rocker arm 130 according to the first embodiment of the present invention comprises an upper rocker arm 131 and a lower rocker arm 132, the contact surface of the lower rocker arm 132 and the upper rocker arm 131 are engaged through a concave-convex structure, and may be secured by a coupling bar 136 in their center line, and thereby attaining rotation of said upper rocker arm with regard to said lower rocker arm, and radial engagement and axial limiting and fixation with respect to each other.

As shown in Fig. 5A, the upper rocker arm 131 and the lower rocker arm 132 are cylindrical shape at the position and vicinity where they engaged with each other, and at the contact surface fitted each other near the outer circumference of the cylindrical shape, the upper rocker arm 131 is in a downward convex shape, the lower rocker arm 132 is in a upward concave shape. Therefore, when the upper rocker arm 131 and the lower rocker arm 132 are engaged with each other, there are formed an axial interface M and a radial interface N, thereby attaining the rotation of the upper rocker arm 131 with regard to the lower rocker arm 132, and radial engagement and axial limiting there between. Similarly, the upper rocker arm 131 can be a downward concave shape, the lower rocker arm 132 can be an upward convex shape, and the same technical effect as above can be achieved, thus falling within the scope of the present invention as defined by the claims.

After the position of the upper rocker arm 131 with regard to the lower rocker arm 132 is set, in order to enable to adjust and lock the relative position with respect to each other, there is provided with a through hole at the axis of the upper rocker arm 131 and lower rocker arm 132, and detachably fixed connection each other by a coupling bar 136. In the example as shown, the coupling bar 136 comprises a lower end 136-1, a connecting rod 136-2, and an eccentric handle 136-3 hinged on the upper end of the connecting rod 136-2.

As shown in Fig. 5A, the lower rocker arm 132 may comprise a groove 132-1 located at a position in its center at its lower end. In this case, the lower end 136-1 of the coupling bar 136 is required to have a dimension larger than the size of the groove 132-1. The rocker arm 130 comprises a pre-fitting clearance adjusting mechanism 137 for adjusting the clearance between the upper rocker arm 131 and the lower rocker arm 132 under non-fixed state. The pre-fitting clearance adjusting mechanism 137 comprise a bush 137-1 and an adjusting nut 137-2, wherein the bush 137-1 is positioned around a portion of the connecting rod 136-2 and inserted into the upper rocker arm at its upper end, the adjusting nut is threaded connection with the lower end of the bush 137-1. From Fig. 5A, groove 132-1 may have a dimension adapted to receive the adjusting nut 137-2. As well known to those skilled in the art, in order to adjust a presetting clearance between the upper rocker arm131 and the lower rocker arm 132, there is may use various similar structures, for example, two or more bolt-nut structure with axial symmetrical configuration connected between the upper rocker arm 131 and the lower rocker arm 132. However, the pre-fitting clearance adjusting mechanism 137 positioned around the connecting rod in the prefer embodiments mentioned above uses the space efficiently and attains a compact structure.

As shown in Fig. 5A, the rocker arm 130 may comprise a limiting device 138 for limiting the rotation of the upper rocker arm131 with regard to lower rocker arm 132. In this case, a through hole may be provided in the lower rocker arm 132, and a groove may be provided in the upper rocker arm 131 at the position corresponding to the through hole of the lower rocker arm 132; and vice versa, a through hole may be provided in the upper rocker arm 131, and a groove may be provided in the lower rocker arm 132 at the position corresponding to the through hole of the lower rocker arm 131. Therefore, when said through hole is at the position facing to said groove, the limiting device 138 may be inserted therein, and making both be fixed each other. The setting position of the through hole and the groove mentioned above may be located at the engaging surface to be contacted each other between the upper rocker arm 131 and the lower rocker arm 132 as shown in Fig. 5A, also may be located at the cylindrical surface of the upper rocker arm 131 and the lower rocker arm 132. Furthermore, the limiting device 138 can be in form of a pin as shown in Fig. 5A, but also can be other forms as known in the art, for example, a stopping screw (not shown in the drawing) .

As shown in Fig. 5A, the rocker arm 130 may comprise a safety switch 139 which is provide to turn on the power supply of the cutting machine 100 only when the circular disk saw blade 153 in the cutting machine head assembly 150 corresponds to the saw blade receiving groove 121, and to turn off the power supply of the cutting machine 100 at any other positions. The safety switch 139 may be a mechanical trigger switch. Alternatively, the safety switch 139 may be a position sensor which can output signals to turn on the power supply of the cutting machine 100 only when the circular disk saw blade 153 in the cutting machine head assembly 150 corresponds to the saw blade receiving groove 121, and to turn off the power supply of the cutting machine 100 at any other positions.

As shown in Fig. 3, Fig. 4, and Fig. 5A, one or more connecting holes 142 may be included in the rocker arm 130 and the pulling rod 140. Preferably, the one or more connecting holes 142 may have a number of 1 to 3. The additional processing head frames 170 may be inserted into the one or more connecting holes 142, thereby increasing additional processing heads for the cutting machine 100. It is to be note that the one or more connecting holes 142 may be provided in the upper rocker arm 131 or any other position thereabout, which can be selected as need to design, and there is no limit thereof in the present invention, and one of them may be provided on one end of the pulling rod 140 to which no cutting machine head assembly 150 is connected. In addition, although the one or more connecting holes 142 are shown in Fig. 3, Fig. 4 and Fig. 5A, it is acceptable that other connecting mechanism may be used to attach additional processing head frame or directly attaching additional processing heads as long as it can play a role for fixing connection. Other connecting mechanism can be, for example, a fixture, a snap ring, a fixer, a threaded connection, and so on, and there is no limit thereof in the present invention.

As shown in Fig. 5B, on the circumference surfaces matched each other between the upper rocker arm 131 and the lower rocker arm 132, angle indexes 132-2 may be marked on the lower rocker arm 132, and an alignment mark 131-1 may be provided on the upper rocker arm 131. Therefore, when the upper rocker arm 131 is rotated with regard to the lower rocker arm 132, a scale reading can be read from the angle indexes 132-2 in accordance with a value to which the alignment mark 131-1 points, thereby defining the orientation angle of the upper rocker arm 131. Similarly, the angle indexes and the alignment mark may respectively be provided on the upper rocker arm 131 and the lower rocker arm 132, and thereby obtaining the same effect.

As shown in Fig. 5A, at the lower end of the lower rocker arm 132 comprises a connecting head 132-3, which is hinged with the slider 124. In addition, an elongated hole 132-4 may be provided in the connecting head 132-3, the locking knob 125 can lock the rocker arm 130 by passing through the elongated hole 132-4.

As shown in Fig. 5A, the upper rocker arm 131 comprise two sliding path holes 134, and pulling rods 140 pass there through and form a sliding fit therewith. Although the sliding path holes 134 are shown as two circles in Fig. 5A, the present invention is not limited to this, and the sliding path holes 134 can be any other cross section shape, for example, in shape of rectangle, ellipse, triangle, and so on.

### Second embodiment of the present invention:

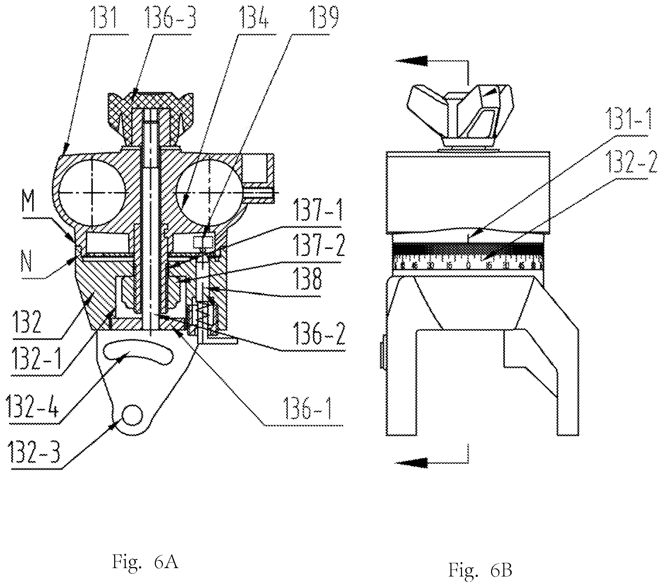

Fig. 6 is a view showing the structure of a rocker arm according to the second embodiment of the present invention, wherein Fig. 6A is a cross section view showing the structure of the rocker arm according to the second embodiment of the present invention, and Fig. 6B is a side view showing the structure of the rocker arm according to the second embodiment of the present invention.

The rocker arm according to the second embodiment as shown in Fig. 6 is substantially identical with the rocker arm according to the first embodiment as shown in Fig. 5 in structure, however, the difference there between in that the upper end of the coupling bar 136 is provided with a thread which is engaged with a nut 136-3 instead of an eccentric handle. In addition, the coupling bar136 according to the second embodiment may be exchanged with the coupling bar136 according to the first embodiment, thus it may be chosen depending on design requirements. The other technical features in the second embodiment are identical with that in the first embodiment, thus the description thereof will be omitted.

### Third embodiment of the present invention:

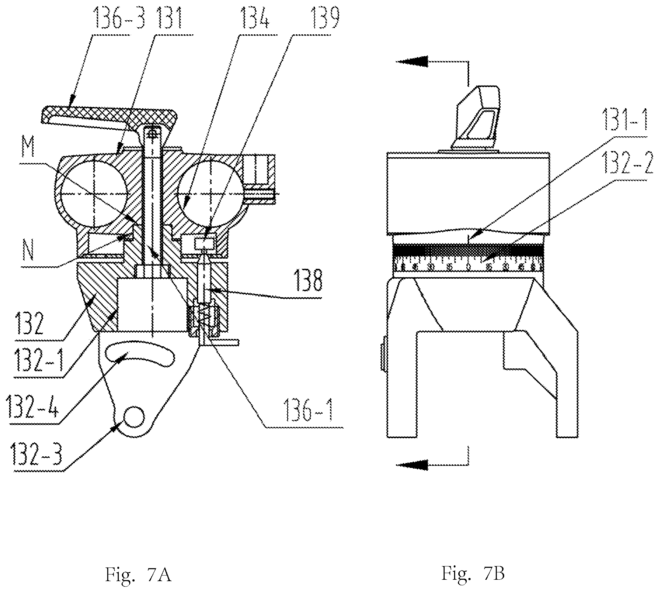

Fig. 7 is a view showing the structure of a rocker arm according to the third embodiment of the present invention, wherein Fig. 7A is a cross section view showing the structure of the rocker arm according to third embodiment of the present invention, and Fig. 7B is a side view showing the structure of the rocker arm according to the third embodiment of the present invention.

The rocker arm according to the third embodiment as shown in Fig. 7 is substantially identical with regard to the rocker arm structure according to the first embodiment as shown in Fig. 5, however, the difference there between in that the concave-convex structure at the contact surface between the upper rocker arm 131 and the lower rocker arm 132 in the third embodiment is located near their center line instead of adjacent their outer circumference in the first embodiment. It needs to be explained that, although the upper rocker arm 131 as shown in Fig. 7 comprises a downward concave and the lower rocker arm 132 comprises an upward convex, such concave-convex structure can be an inverted structure, that is, the upper rocker arm 131 comprises a downward convex, and the lower rocker arm 132 comprises an upward concave. In addition, although no pre-fitting clearance adjusting mechanism 137 is shown in the rocker arm structure shown in Fig. 7A, it can be identical with the first and second embodiments, a pre-fitting clearance adjusting mechanism 137 can be provided in the embodiment shown in Fig. 7A. Whether or not to provide a clearance presetting structure 137 can be determined by the requirements for design and practical production. The other technical features in the third embodiment are identical with that in the first embodiment, thus the description thereof will be omitted.

### Fourth embodiment of the present invention:

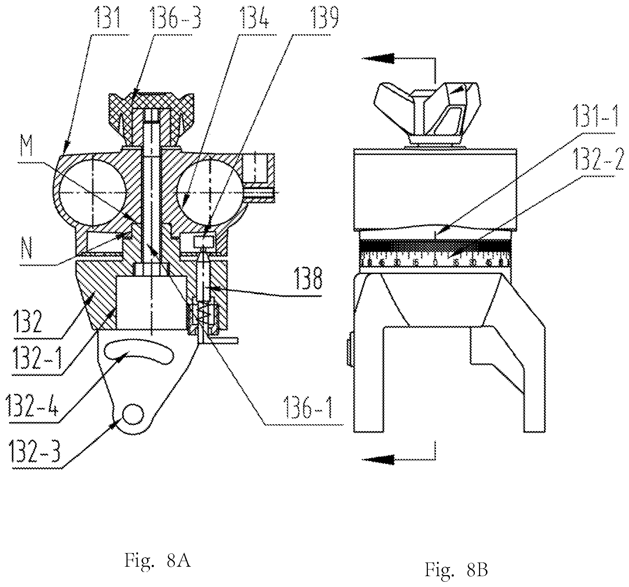

Fig. 8 is a view showing the structure of a rocker arm according to the fourth embodiment of the present invention, wherein Fig. 8A is a cross section view showing the structure of the rocker arm according to the fourth embodiment of the present invention, and Fig. 8B is a side view showing the structure of the rocker arm according to fourth embodiment of the present invention.

The structure of the rocker arm according to fourth embodiment as shown in Fig. 8 is substantially identical with regard to the structure of the rocker arm according to second embodiment as shown in Fig. 6, but the difference there between in that the concave-convex structure at the contact surface between the upper rocker arm 131 and the lower rocker arm 132 in the fourth embodiment is located near their center line instead of adjacent their outer circumference in the first embodiment. It needs to be explained that, although the upper rocker arm 131 as shown in Fig. 8 comprises a downward concave and the lower rocker arm 132 comprises an upward convex, the concave-convex structure can be an inverted structure, that is, the upper rocker arm 131 comprises a downward convex, and the lower rocker arm 132 comprises an upward concave. In addition, although no pre-fitting clearance adjusting mechanism 137 is shown in the rocker arm structure shown in Fig. 8A, it can be identical with the first and second embodiments, a pre-fitting clearance adjusting mechanism 137 can be provided in the embodiment shown in Fig. 8A. Whether or not to provide a clearance presetting structure 137 can be determined by the requirements for design and practical production. The other technical features in the third embodiment are identical with that in the first embodiment, thus the description thereof will be omitted.

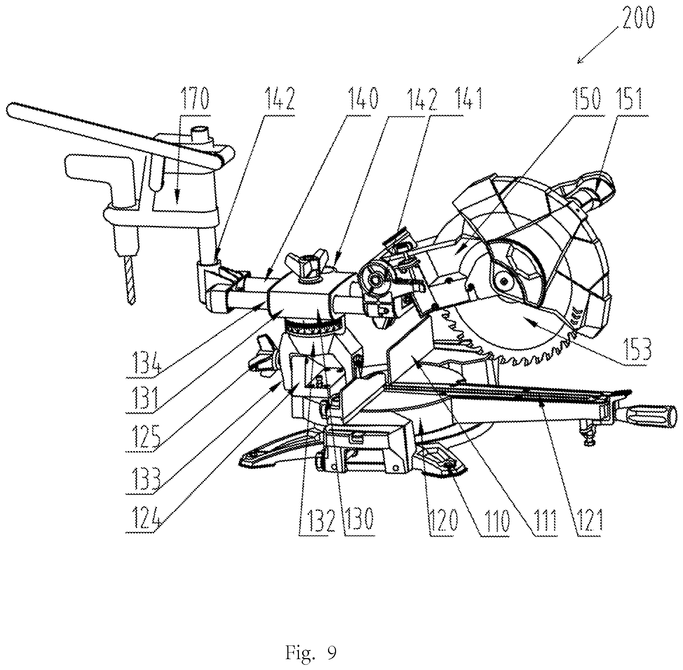

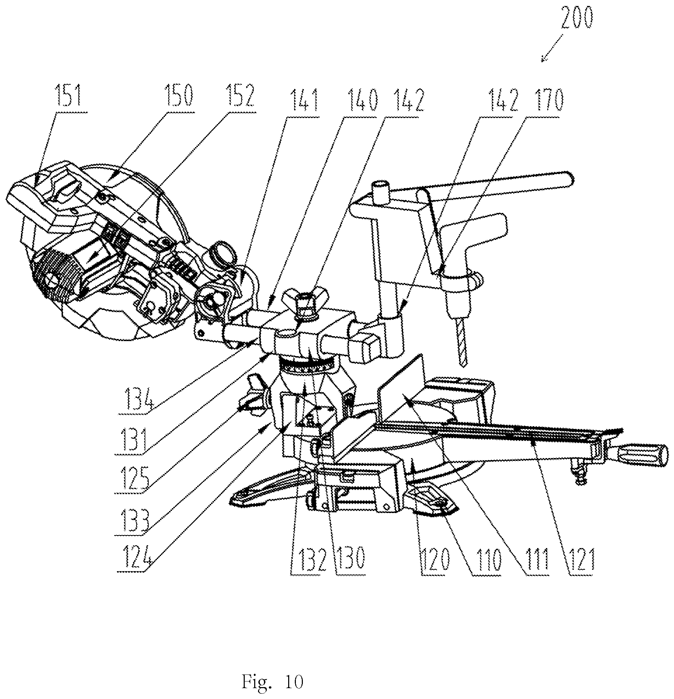

In order to meet a demand for processing by the additional processing heads, the other means can be added to the operating turntable, for example, adding openings, adding matching parts, or attaching other corresponding facilities. These can be designed according to the practical needs. In the following, the description will be made to a cutting machine according to a fifth embodiment of the present invention with reference to Fig. 9 and Fig. 10.

### Fifth embodiment of the present invention:

Fig. 9 is a view showing a cutting machine according to another embodiment of the present invention in a state of cutting a work piece. Fig. 10 is a view showing the cutting machine according to another embodiment of the present invention in a drilling state. The same or corresponding features in Fig. 9 and Fig. 10 with regard to Fig. 3 and Fig. 4 are indicated by the same reference signs, and thus the repetitive description for the same portion will be omitted.

As shown in Fig. 9 and Fig. 10, a cutting machine 200 according to the fifth embodiment of the present invention comprise a pedestal 110, an operating turntable120, a rocker arm 130, a pulling rod 140, a cutting machine head assembly 150, and an additional processing head frame 170.

The pedestal 110, the pulling rod 140, and the cutting machine head assembly 150 according to the fifth embodiment of another embodiment of the present invention are identical with the pedestal 110, the pulling rod 140 and the cutting machine head assembly 150 according to the first embodiment of the present invention, thus only the operating turntable120 and the rocker arm 130 and the connection relation there between are described in the following.

The operating turntable 120 is a workbench of the cutting machine 200. The operating turntable 120 is detachably supported on the pedestal 110 and can be rotated or locked with regard to the pedestal 110 in any angle position.

A linear saw blade receiving groove 121 is provided on the proximal end of the operating turntable 120 in the direction from distal end to proximal end, and a hinge seat 124 is provided at the distal end of the operating turntable 120.

The rocker arm 130 may comprise an upper rocker arm 131 and a lower rocker arm 132 with a cylindrical shape at the position contacted with each other. The lower end of the lower rocker arm 132 is hinged with the hinge seat 124 provided on the operating turntable 120 by a connecting seat 133 and can be locked by a locking knob 125, so as to make it adjusting an angle and locking with regard to the operating turntable120 in the left-right direction. The upper rocker arm 131 is concentrically provided on the lower rocker arm 132, sliding path holes 134 are provided in the upper portion of the upper rocker arm 131. The detail structure of the rocker arm 130 and the rotation and locking of the upper rocker arm 131 with regard to the lower rocker arm 132 and so on, may refer to the detail description mentioned above according to the first embodiment of the aspect of the present invention.

Compared to the cutting machine 200 according to another embodiment of the present invention, there are the advantages of the cutting machine 100 according to the aspect of the present invention in that it increases the processing length of the cutting machine without reducing working accuracy, due to the addition of the sliding assembly 180 so as to increase a distance of the reciprocating motion of the circular disk saw blade along the saw blade receiving groove.

The some technical features in one aspect of the present invention may combine with the technical means in another aspect of the present invention.

The cutting machine according to the present invention increases one or more additional processing heads on the basis of the cutting machine according to the prior art. It performs transformation/switching of processing position by rotating and locking the upper rocker arm with regard to the lower rocker arm, thereby transforming/switching the desired working head to the position above the operating turntable, thus performing subsequent processing, such as drilling, grinding, and polishing to the work piece after cutting processing, or performing cutting processing to the work piece after drilling, grinding, and polishing.

Therefore, it is to optimum the use of performance of the operating turntable to position a work piece thereon, and accordingly increasing the working accuracy of the additional processing head. Also, since a work piece can be processed in various kinds of processing on the same operating turntable, the time required to mount a work piece to different working turntables can be reduced enormously and thus improve the efficiency substantially.

Before any of the additional processing head begins its processing, it is required to adjust the rocker arm so as to position it in its vertical position, that is, in a vertical cutting state. It also needs to lock the slider with regard to the pulling rod. Thus, the cutting machine can change to another additional working state, for example, in a drilling state.

It should be understood by those skilled in the art that various modifications, combinations, sub-combinations and alterations may occur depending on design requirements and other factors insofar as they are within the scope of the appended claims. The various modifications, combinations, sub-combinations and alterations should fall within the scope of the present invention as defined by the claims.

## Claims

1. A cutting machine (100, 200), comprising:
a pedestal (110) provided with a back plate (111) for fixing a work piece;
an operating turntable (120) pivotally supported on said pedestal (110), comprising a linear saw blade receiving groove (121) in the direction from distal to proximal, and
wherein either
said back plate (111) is provided in the middle upper portion of the pedestal (110);
a sliding path (123) disposed at its distal end side along or parallel to an extension line of said saw blade receiving groove (121);
a slider (124) slidably engaged with said sliding path (123) so as to form a sliding assembly with said sliding path (123);
or
said back plate (111) is provided on the proximal end side of the pedestal (110), and
a rocker arm seat (124) is disposed at distal end side of the operating turntable (120);
**characterized by**
a rocker arm (130) comprising an upper rocker arm (131) and a lower rocker arm (132) having a cylindrical shape in the position of engagement with each other, the lower end of said lower rocker arm (132) is hinged with and locked to said slider (124) or said rocker arm seat (124), thereby making it adjust an angle and making it be locked in left-right direction with regard to said operating turntable (120), said upper rocker arm (131) concentrically disposed on said lower rocker arm (132), said upper rocker arm (131) is provided with sliding path holes (134);
a pulling rod (140) passing through said sliding path holes (134) and sliding engaged with said sliding path holes (134), comprising a connecting seat (141) provided at its proximal end;
a cutting machine head assembly (150) hinged at its distal end with said connecting seat (141) of said pulling rod (140), provided with a handle (151) at its proximal end, thereby making it pivot up and down with regard to said pulling rod (140) by applying force to said handle (151), which comprises a main body, a motor (152) securely fixed with said main body, and a circular disk saw blade (153) connected to a motor spindle or a driven shaft driven by the spindle through a center hole thereof, wherein the plane on which said circular disk saw blade (153) is located corresponding to said saw blade receiving groove (121) in said operating turntable (120),
wherein the other end of said pulling rod (140) is provided with a connecting hole (142), an additional processing head frame (170) is detachably inserted into said connecting hole (142), said additional processing head frame (170) is mechanically connected with additional processing heads, and
wherein the contact surfaces of said lower rocker arm (132) and said upper rocker arm (131) are connected by a concave-convex structure, and are fixed by a coupling bar (136) in their center line, thereby attaining rotation of said upper rocker arm (131) with regard to said lower rocker arm (132) and thus attaining radial engagement and axial limiting and fixation with respect to each other.

2. The cutting machine (100, 200) according to the claim 1, wherein a connecting hole (142) is further comprised in the upper surface of said upper rocker arm (131), said connecting hole (142) is located on a side of said sliding path holes (134) for detachably inserting the additional processing head frame (170) so that said additional processing head frame (170) is mechanically connected with the additional processing heads.

3. The cutting machine (100, 200) according to the claim 1, wherein two connecting holes (142) are further comprised in the upper surface of said upper rocker arm (131), said two connecting holes (142) are located on both sides of said sliding holes (134) respectively for detachably inserting the additional processing head frame (170) so that said additional processing head frame (170) is mechanically connected with the additional processing heads.

4. The cutting machine (100, 200) according to any one of the claims 1 to 3, wherein said additional processing heads comprise a handheld power drill, a grinder or a polisher.

5. The cutting machine (100, 200) according to the claim 1, wherein said concave-convex structure is a structure that the concave surface of said upper rocker arm (131) is matched with the convex surface of said lower rocker arm (132).

6. The cutting machine (100, 200) according to the claim 1, wherein said concave-convex structure is a structure that the convex surface of said upper rocker arm (131) is matched with the concave surface of said lower rocker arm (132).

7. The cutting machine (100, 200) according to the claim 5 or 6, wherein said concave-convex structure is located at a position of the outer circumference of contact surface of said upper rocker arm (131) and said lower rocker arm (132).

8. The cutting machine (100, 200) according to the claim 5 or 6, wherein said concave-convex structure is located at a position near the center of contact surface of said upper rocker arm (131) and said lower rocker arm (132).

9. The cutting machine (100, 200) according to the claim 1, wherein a bolt and a nut (137-2) are comprised in said coupling bar (136) for fixing said upper rocker arm (131) and said lower rocker arm (132).

10. The cutting machine (100, 200) according to the claim 1, wherein said coupling bar (136) comprises a screw head at the lower end of said coupling bar (136) and an eccentric handle (136-3) coupling to the upper end of said coupling bar (136).

11. The cutting machine (100, 200) according to the claim 1, wherein said rocker arm (130) comprises a pre-fitting clearance adjusting mechanism (137)for adjusting an engagement clearance of said concave-convex structure between said upper rocker arm (131) and said lower rocker arm (132), and a bolt which is inserted into said upper rocker arm (131) at its upper end and passes through said lower rocker arm (132), at its another end to the bolt defines a clearance between the engagement surface of said upper rocker arm (131) and said lower rocker arm (132) through the threads of a nut.

12. The cutting machine (100, 200) according to the claim 11, wherein said pre-fitting clearance adjusting mechanism (137) is a hollow bolt and a nut connecting with said coupling bar (136).

13. The cutting machine (100, 200) according to the claim 1, wherein a limiting hole and a limiting pin inserting in said limiting hole are provided in said lower rocker arm (132), and a limiting groove is provided in a position which is on said upper rocker arm (131) to correspond to a position of one or more connection hole (142) located on a working position of said operating turntable (120), so as to obtain rotating limit between said upper rocker arm (131) and said lower rocker arm (132) when said limiting pin is inserted into said limiting groove.

14. The cutting machine (100, 200) according to the claim 13, wherein said limiting hole and said limiting groove are located between the upper/lower mating surfaces of said lower rocker arm (132) and said upper rocker arm (131).

15. The cutting machine (100, 200) according to the claim 13, wherein said limiting hole and said limiting groove are located between the cylindrical mating surfaces of said lower rocker arm (132) and said upper rocker arm (131).

16. The cutting machine (100, 200) according to the claim 1, further comprises a safety switch (139), said safety switch (139) is provided to power on the power supply of the cutting machine (100, 200) only when said circular disk saw blade (153) corresponds to said saw blade receiving groove (121), and to power off the power source of the cutting machine (100, 200) at any other positions.

## Patentansprüche

1. Schneidmaschine (100, 200), umfassend:
ein Fußgestell (110), das mit einer Stützplatte (111) zum Fixieren eines Werkstücks ausgestattet ist;
einen Bedienungsdrehtisch (120), drehbar auf dem Fußgestell (110) gehalten, umfassend eine lineare Sägeblattaufnahmenut (121) in der Richtung von distal nach proximal, und
wobei entweder
die Stützplatte (111) im mittleren oberen Bereich des Fußgestells (110) vorgesehen ist;
ein Gleitweg (123) an seiner distalen Endseite entlang oder parallel zu einer Verlängerungslinie der Sägeblattaufnahmenut (121) angeordnet ist;
ein Gleitstück (124) verschiebbar mit dem Gleitweg (123) gekoppelt ist, um mit dem Gleitweg (123) eine Gleitbaugruppe zu bilden;
oder
die Stützplatte (111) auf der proximalen Endseite des Fußgestells (110) vorgesehen ist, und
ein Schwingarmsitz (124) an der distalen Endseite des Bedienungsdrehtisches (120) angeordnet ist;
**gekennzeichnet durch**
einen Schwingarm (130), umfassend einen oberen Schwingarm (131) und einen unteren Schwingarm (132) mit einer zylindrischen Form in der Koppelstellung miteinander, wobei das untere Ende des unteren Schwingarms (132) an das Gleitstück (124) oder den Schwingarmsitz (124) angelenkt und damit verriegelt ist, wodurch es einen Winkel in der Links-Rechts-Richtung bezüglich des Bedienungsdrehtisches (120) einstellen und verriegeln lässt, der obere Schwingarm (131) konzentrisch auf dem unteren Schwingarm (132) angeordnet ist, wobei der obere Schwingarm (131) mit Gleitweglöchern (134) versehen ist;
eine Zugstange (140), die durch die Gleitweglöcher (134) verläuft und gleitend mit den Gleitweglöchern (134) gekoppelt ist, umfassend einen an ihrem proximalen Ende vorgesehenen Verbindungssitz (141);
eine Schneidmaschinenkopfbaugruppe (150), an ihrem distalen Ende an dem Verbindungssitz (141) der Zugstange (140) angelenkt, an ihrem proximalen Ende mit einem Handgriff (151) versehen, der sie dadurch bezüglich der Zugstange (140) durch das Ausüben von Kraft auf den Handgriff (151) auf und ab schwenken lässt, die umfasst: einen Hauptteil, einen sicher am dem Hauptteil befestigten Motor (152), und ein Kreissägeblatt (153), das mit einer Motorspindel oder einer durch die Spindel durch ein Mittelloch davon hindurch angetriebenen Welle verbunden ist, wobei die Ebene, auf der das Kreissägeblatt (153) liegt, der Sägeblattaufnahmenut (121) in dem Bedienungsdrehtisch (120) entspricht,
wobei das andere Ende der Zugstange (140) mit einem Verbindungsloch (142) ausgestattet ist, ein zusätzlicher Bearbeitungskopfrahmen (170) abnehmbar in das Verbindungsloch (142) eingesetzt ist, der zusätzliche Bearbeitungskopfrahmen (170) mit zusätzlichen Bearbeitungsköpfen mechanisch verbunden ist, und
wobei die Kontaktflächen des unteren Schwingarms (132) und des oberen Schwingarms (131) über einen Konkav-Konvex-Aufbau verbunden sind und durch einen Koppelstab (136) in ihrer Mittellinie befestigt sind, wodurch eine Drehung des unteren Schwingarms (132) bezüglich des oberen Schwingarms (131) und somit eine radiale Kopplung und eine axiale Begrenzung und Befestigung bezüglich einander bewirkt wird.

2. Schneidmaschine (100, 200) nach Anspruch 1, wobei ein Verbindungsloch (142) weiter in der oberen Fläche des oberen Schwingarms (131) enthalten ist, wobei sich das Verbindungsloch (142) auf einer Seite der Gleitweglöcher (134) zum abnehmbaren Einsetzen des zusätzlichen Bearbeitungskopfrahmens (170) befindet, sodass der zusätzliche Bearbeitungskopfrahmen (170) mit den zusätzlichen Bearbeitungsköpfen mechanisch verbunden wird.

3. Schneidmaschine (100, 200) nach Anspruch 1, wobei zwei Verbindungslöcher (142) weiter in der oberen Fläche des oberen Schwingarms (131) enthalten sind, wobei sich die beiden Verbindungslöcher (142) jeweils auf beiden Seiten der Gleitweglöcher (134) zum abnehmbaren Einsetzen des zusätzlichen Bearbeitungskopfrahmens (170) befinden, sodass der zusätzliche Bearbeitungskopfrahmen (170) mit den zusätzlichen Bearbeitungsköpfen mechanisch verbunden wird.

4. Schneidmaschine (100, 200) nach einem beliebigen der Ansprüche 1 bis 3, wobei die zusätzlichen Bearbeitungsköpfe eine Handbohrmaschine, einen Schleifer oder eine Poliermaschine umfassen.

5. Schneidmaschine (100, 200) nach Anspruch 1, wobei der Konkav-Konvex-Aufbau ein Aufbau ist, bei dem die konkave Fläche des oberen Schwingarms (131) mit der konvexen Fläche des unteren Schwingarms (132) zusammengepasst ist.

6. Schneidmaschine (100, 200) nach Anspruch 1, wobei der Konkav-Konvex-Aufbau ein Aufbau ist, bei dem die konvexe Fläche des oberen Schwingarms (131) mit der konkaven Fläche des unteren Schwingarms (132) zusammengepasst ist.

7. Schneidmaschine (100, 200) nach Anspruch 5 oder 6, wobei sich der Konkav-Konvex-Aufbau an einer Stelle des äußeren Umfangs der Kontaktfläche des oberen Schwingarms (131) und des unteren Schwingarms (132) befindet.

8. Schneidmaschine (100, 200) nach Anspruch 5 oder 6, wobei sich der Konkav-Konvex-Aufbau an einer Stelle nahe der Mitte der Kontaktfläche des oberen Schwingarms (131) und des unteren Schwingarms (132) befindet.

9. Schneidmaschine (100, 200) nach Anspruch 1, wobei der Koppelstab (136) einen Bolzen und eine Mutter (137-2) zum Befestigen des oberen Schwingarms (131) und des unteren Schwingarms (132) umfasst.

10. Schneidmaschine (100, 200) nach Anspruch 1, wobei der Koppelstab (136) einen Schraubenkopf am unteren Ende des Koppelstabs (136) und einen Exzentergriff (136-3) umfasst, der sich an das obere Ende des Koppelstabs (136) koppelt.

11. Schneidmaschine (100, 200) nach Anspruch 1, wobei der Schwingarm (130) eine Abstands-Voreinstellvorrichtung (137) zum Einstellen eines Koppelabstands des Konkav-Konvex-Aufbaus zwischen dem oberen Schwingarm (131) und dem unteren Schwingarm (132) umfasst, und ein Bolzen, der in den oberen Schwingarm (131) an seinem oberen Ende eingesetzt ist und durch den unteren Schwingarm (132) verläuft, an seinem anderen Ende zum Bolzen einen Abstand zwischen der Koppelfläche des oberen Schwingarms (131) und des unteren Schwingarms (132) durch das Gewinde einer Mutter festlegt.

12. Schneidmaschine (100, 200) nach Anspruch 11, wobei die Abstands-Voreinstellvorrichtung (137) aus einem Hohlbolzen und einer Mutter besteht, die sich mit dem Koppelstab (136) verbinden.

13. Schneidmaschine (100, 200) nach Anspruch 1, wobei ein Begrenzungsloch und ein sich in das Begrenzungsloch einschiebender Begrenzungsstift in dem unteren Schwingarm (132) vorgesehen sind, und eine Begrenzungsvertiefung an einer Stelle vorgesehen ist, die sich so auf dem oberen Schwingarm (131) befindet, dass sie einer Stelle eines oder mehrerer Verbindungslöcher (142) entspricht, die sich an einer Arbeitsstellung des Bedienungsdrehtisches (120) befinden, sodass sich eine Drehungsbegrenzung zwischen dem oberen Schwingarm (131) und dem unteren Schwingarm (132) ergibt, wenn der Begrenzungsstift in die Begrenzungsvertiefung eingeführt ist.

14. Schneidmaschine (100, 200) nach Anspruch 13, wobei sich das Begrenzungsloch und die Begrenzungsvertiefung zwischen der oberen und der unteren Passfläche des unteren Schwingarms (132) und des oberen Schwingarms (131) befinden.

15. Schneidmaschine (100, 200) nach Anspruch 13, wobei sich das Begrenzungsloch und die Begrenzungsvertiefung zwischen den zylindrischen Passflächen des unteren Schwingarms (132) und des oberen Schwingarms (131) befinden.

16. Schneidmaschine (100, 200) nach Anspruch 1, weiter umfassend einen Sicherheitsschalter (139), wobei der Sicherheitsschalter (139) vorgesehen ist, die Stromversorgung der Schneidmaschine (100, 200) nur einzuschalten, wenn das Kreissägeblatt (153) und die Sägeblattaufnahmenut (121) übereinstimmen, und die Stromversorgung der Schneidmaschine (100, 200) bei allen anderen Stellungen auszuschalten.

## Revendications

1. Machine à couper (100, 200), comprenant :
un socle (110) équipé d'une plaque arrière (111) pour fixer une pièce à usiner ;
une plaque tournante de fonctionnement (120) supportée de manière pivotante sur ledit socle (110), comprenant une rainure de réception (121) de lame de scie linéaire dans la direction distale à proximale, et
dans laquelle soit
ladite plaque arrière (111) est prévue dans la partie centrale supérieure du socle (110) ;
un chemin de glissement (123) disposé sur son côté d'extrémité distale le long ou parallèlement à une ligne d'extension de ladite rainure de réception (121) de lame de scie ;
un coulisseau (124) en prise coulissante avec ledit chemin de glissement (123) de manière à former un assemblage glissant avec ledit chemin de glissement (123) ;
ou
ladite plaque arrière (111) est prévue sur le côté d'extrémité proximale du socle (110), et
un siège (124) de culbuteur est disposé sur le côté d'extrémité distale de la plaque tournante de fonctionnement (120) ;
**caractérisée par**
un culbuteur (130) comportant un culbuteur supérieur (131) et un culbuteur inférieur (132) ayant une forme cylindrique dans la position d'engagement l'un avec l'autre, l'extrémité inférieure dudit culbuteur inférieur (132) est articulée et verrouillée sur ledit coulisseau (124) ou ledit siège (124) de culbuteur, faisant ainsi à ce qu'il ajuste un angle et qu'il soit verrouillé dans la direction gauche-droite par rapport à ladite plaque tournante de fonctionnement (120), ledit culbuteur supérieur (131) étant disposé concentriquement sur ledit culbuteur inférieur (132), ledit culbuteur supérieur (131) étant muni de trous (134) de chemin de glissement ;
une tige de traction (140) passant à travers lesdits trous (134) de chemin de glissement et coulissant en prise avec lesdits trous (134) de chemin de glissement, comprenant un siège de raccordement (141) prévu à son extrémité proximale ;
un assemblage de tête (150) de machine à couper articulé à son extrémité distale avec ledit siège de raccordement (141) de ladite tige de traction (140), muni d'une poignée (151) à son extrémité proximale, ce qui le fait ainsi pivoter vers le haut et vers le bas par rapport à ladite tige de traction (140) en appliquant une force sur ladite poignée (151), qui comprend un corps principal, un moteur (152) fixé solidement avec ledit corps principal et une lame de scie circulaire (153) reliée à une broche de moteur ou à un arbre mené, entraîné par la broche à travers un trou central de celle-ci, dans lequel le plan sur lequel ladite lame de scie circulaire (153) est située correspond à ladite rainure de réception (121) de lame de scie dans ladite plaque tournante de fonctionnement (120),
dans laquelle l'autre extrémité de ladite tige de traction (140) est munie d'un trou de connexion (142), un cadre de tête d'usinage (170) supplémentaire est inséré de manière amovible dans ledit trou de connexion (142), ledit cadre de tête d'usinage (170) supplémentaire est relié mécaniquement avec des têtes d'usinage supplémentaires, et
dans laquelle les surfaces de contact dudit culbuteur inférieur (132) et dudit culbuteur supérieur (131) sont reliées par une structure concave-convexe, et sont fixées par une barre d'accouplement (136) dans leur ligne centrale, réalisant ainsi la rotation dudit culbuteur supérieur (131) par rapport audit culbuteur inférieur (132) et réalisant ainsi l'engagement radial et la limitation axiale et la fixation l'un par rapport à l'autre.

2. Machine à couper (100, 200) selon la revendication 1, dans laquelle un trou de connexion (142) est en outre compris dans la surface supérieure dudit culbuteur supérieur (131), ledit trou de connexion (142) étant situé sur un côté desdits trous de chemin de glissement (134) pour insérer de manière amovible le cadre de tête d'usinage supplémentaire (170) de sorte que ledit cadre de tête d'usinage supplémentaire (170) soit mécaniquement connecté aux têtes d'usinage supplémentaires.

3. Machine à couper (100, 200) selon la revendication 1, dans laquelle deux trous de connexion (142) sont en outre compris dans la surface supérieure dudit culbuteur supérieur (131), lesdits deux trous de connexion (142) étant respectivement situés sur les deux côtés desdits trous de glissement (134) pour insérer de manière amovible le cadre de tête d'usinage supplémentaire (170) de sorte que ledit cadre de tête d'usinage supplémentaire (170) soit mécaniquement connecté aux têtes d'usinage supplémentaires.

4. Machine à couper (100, 200) selon l'une quelconque des revendications 1 à 3, dans laquelle lesdites têtes d'usinage supplémentaires comportent une perceuse électrique portative, une meuleuse ou une polisseuse.

5. Machine à couper (100, 200) selon la revendication 1, dans laquelle ladite structure concave-convexe est une structure telle que la surface concave dudit culbuteur supérieur (131) soit appariée avec la surface convexe dudit culbuteur inférieur (132).

6. Machine à couper (100, 200) selon la revendication 1, dans laquelle ladite structure concave-convexe est une structure telle que la surface convexe dudit culbuteur supérieur (131) soit appariée avec la surface concave dudit culbuteur inférieur (132).

7. Machine à couper (100, 200) selon la revendication 5 ou 6, dans laquelle ladite structure concave-convexe est disposée dans une position de la circonférence extérieure de la surface de contact dudit culbuteur supérieur (131) et dudit culbuteur inférieur (132).

8. Machine à couper (100, 200) selon la revendication 5 ou 6, dans laquelle ladite structure concave-convexe est disposée dans une position proche du centre de la surface de contact dudit culbuteur supérieur (131) et dudit culbuteur inférieur (132).

9. Machine à couper (100, 200) selon la revendication 1, dans laquelle un boulon et un écrou (137-2) sont compris dans ladite barre d'accouplement (136) pour fixer ledit culbuteur supérieur (131) et ledit culbuteur inférieur (132).

10. Machine à couper (100, 200) selon la revendication 1, dans laquelle ladite barre d'accouplement (136) comprend une tête de vis à l'extrémité inférieure de ladite barre d'accouplement (136) et une poignée excentrique (136-3) couplant l'extrémité supérieure de ladite barre d'accouplement (136).

11. Machine à couper (100, 200) selon la revendication 1, dans laquelle ledit culbuteur (130) comprend un mécanisme de préréglage de jeu (137) pour régler un jeu d'engagement de ladite structure concave-convexe entre ledit culbuteur supérieur (131) et ledit culbuteur inférieur (132), et un boulon qui est inséré dans ledit culbuteur supérieur (131) à son extrémité supérieure et passe à travers ledit culbuteur inférieur (132), définit à son autre extrémité vers le boulon un jeu entre la surface d'engagement dudit culbuteur supérieur (131) et ledit culbuteur inférieur (132) par les filets d'un écrou.

12. Machine à couper (100, 200) selon la revendication 11, dans laquelle ledit mécanisme de préréglage de jeu (137) est un boulon creux et un écrou connecté avec ladite barre d'accouplement (136).

13. Machine à couper (100, 200) selon la revendication 1, dans laquelle un trou de limitation et une broche de limitation s'insérant dans ledit trou de limitation sont prévus dans ledit culbuteur inférieur (132), et une rainure de limitation est prévue dans une position qui est sur ledit culbuteur supérieur (131) pour correspondre à une position d'un ou plusieurs trous de connexion (142) situés dans une position de travail de ladite plaque tournante de fonctionnement (120), de manière à obtenir une limite rotative entre ledit culbuteur supérieur (131) et ledit culbuteur inférieur (132) lorsque ladite broche de limitation est introduite dans ladite rainure de limitation.

14. Machine à couper (100, 200) selon la revendication 13, dans laquelle ledit trou de limitation et ladite rainure de limitation sont situés entre les surfaces conjuguées supérieure/inférieure dudit culbuteur inférieur (132) et dudit culbuteur supérieur (131).

15. Machine à couper (100, 200) selon la revendication 13, dans laquelle ledit trou de limitation et ladite rainure de limitation sont situés entre les surfaces conjuguées cylindriques dudit culbuteur inférieur (132) et dudit culbuteur supérieur (131).

16. Machine à couper (100, 200) selon la revendication 1, comprenant en outre un interrupteur de sécurité (139), ledit interrupteur de sécurité (139) étant prévu pour mettre sous tension l'alimentation électrique de la machine à couper (100, 200) uniquement lorsque ladite lame de scie circulaire (153) correspond à ladite rainure de réception (121) de lame de scie, et pour couper l'alimentation électrique de la machine à couper (100, 200) dans toute autre position.
